# DEMANDE DE BREVET EUROPEEN

(11) **EP 1 329 697 A1**
(43) Date de publication de la demande: **23.07.2003**
(21) Numéro de dépôt: 03290017.7
(22) Date de dépôt: 06.01.2003
(51) Int. Cl.: G01F 3/08

(54) **Chambre de mesure pour compteur de liquide volumétrique, du type à piston oscillant**

(30) Priorité: 07.01.2002 FR 2000143
(71) Demandeur: Actaris S.A.S., 92120 Montrouge (FR)
(72) Inventeur: Guillot, Denis, 01310 Buellas (FR)
(74) Mandataire: Feray, Valérie

(57) **Abrégé**

Un compteur de liquide volumétrique à piston oscillant comporte généralement une chambre de mesure (1) cylindrique munie d'un fond (2), d'une paroi latérale (3), d'un couvercle (4). Le fond et le couvercle sont munis respectivement d'un puits inférieur (5a) et supérieur (5b) de dimension radiale inférieure à celle de la chambre. Le puits inférieur comprend en son centre un galet (6), une première extrémité (6a) du galet étant liée au fond, une seconde extrémité (6b) du galet se trouvant dans un espace entre le fond et le couvercle. Un piston (7) de dimension radiale comprise entre celle de la chambre et celle du puits est positionné de manière excentrique dans la chambre. Le piston comporte à mi-hauteur une paroi plane (8) munie d'un téton inférieur (9) dirigé vers le fond et d'un téton supérieur (10) dirigé vers le couvercle. Le téton dirigé vers le fond est destiné à tourner autour du galet. Une première extrémité du téton inférieur est liée à la paroi, une seconde extrémité du téton inférieur se trouve dans un espace entre la paroi et le fond. Le galet (6) et/ou le téton inférieur sont respectivement munis de moyens flexibles permettant à la seconde extrémité (6b,9b) du galet et/ou du téton inférieur d'être libre de se mouvoir relativement à la première extrémité (6a,9a) du galet et/ou du téton inférieur.

## Description

L'invention concerne le domaine des chambres de mesure pour compteur de liquide volumétrique, en particulier du type à piston oscillant. Ce type de compteur et son fonctionnement sont bien connus par l'homme du métier, notamment par le document WO01/02250. Un compteur de liquide volumétrique à piston oscillant comporte généralement une chambre de mesure cylindrique munie d'un fond, d'une paroi latérale et d'un couvercle. Le fond et le couvercle sont munis d'un puits inférieur et supérieur de dimension radiale inférieure à celle de la chambre. Le puits inférieur comprend en son centre un galet, une première extrémité du galet étant liée au fond, une seconde extrémité du galet se trouvant dans un espace entre le fond et le couvercle. Un piston de dimension radiale comprise entre celle de la chambre et celle du puits est positionné de manière excentrique dans la chambre. Le piston comporte à mi-hauteur une paroi plane munie d'un téton inférieur dirigé vers le fond et d'un téton supérieur dirigé vers le couvercle. Le téton dirigé vers le fond est destiné à tourner autour du galet. Une première extrémité du téton inférieur est liée à la paroi, une seconde extrémité du téton inférieur se trouve dans un espace entre la paroi et le fond.

Un problème particulier lié à ce type de compteur est leur mauvais comportement lors du comptage d'eau transportant des particules solides telles que des grains de sable. En effet, les jeux entre les différents éléments constituant la chambre sont tels qu'un simple grain de sable peut entraîner un grippage complet du mouvement du piston ou à tout le moins une baisse significative des performances métrologiques au fil du temps.

Le document US 6,018,995 traite du problème de la résistance (compris en ce que la précision du compteur ne doit pas être affectée de manière significative par la traversée des particules) du compteur au passage de particules solides du type grains de sable transportés par le liquide. Le compteur volumétrique comporte une chambre de mesure avec un fond, une paroi cylindrique, un tourillon central, un anneau de guidage, une paroi de séparation, des ouvertures d'entrée et de sortie. Un piston est localisé dans la chambre de mesure et possède un fond, une paroi cylindrique, au moins un tourillon de pilotage s'engageant avec et tournant autour du tourillon central de la chambre de mesure. Le piston est muni d'une fente de guidage s'étendant dans la paroi et le fond. Au moins un des tourillons, le tourillon central ou le tourillon de pilotage est formé en tant que cylindre à paroi fine flexible élastique, par exemple composé d'un matériau viscoplastique.
Néanmoins, un tel dispositif n'est pas satisfaisant. Il présente notamment des inconvénients liés à la difficulté et au coût de fabrication et de mise en oeuvre d'un cylindre à paroi fine flexible élastique. Par ailleurs, un tel dispositif nécessite l'emploi d'un matériau très flexible dont les caractéristiques en terme de tenue de mécanique ne permettent pas de maintenir la fonction de guidage nécessaire à la performance du compteur. Egalement, les caractéristiques en frottement et en usure du matériau ne permettent pas de maintenir la fonction des tourillons tout au long de la durée de fonctionnement du compteur.

La présente invention a pour objectif de pallier aux inconvénients précités en proposant une chambre de mesure pour compteur de liquide volumétrique, en particulier à piston oscillant, qui permet le passage de liquide chargé en particules solides de la taille de grain de sable, sans dégradation de la métrologie du compteur de liquide, ladite chambre étant simple à industrialiser et peu coûteuse.

Cet objet est atteint grâce à une chambre de mesure pour compteur de liquide volumétrique, en particulier du type à piston oscillant, selon l'invention. Une telle chambre comporte
- un fond,
- une paroi latérale,
- un couvercle,
- le fond et le couvercle étant muni d'un puits inférieur et supérieur de dimension radiale inférieure à celle de la chambre,
- le puits inférieur comprenant en son centre un galet, une première extrémité du galet étant liée au fond, une seconde extrémité du galet se trouvant dans un espace entre le fond et le couvercle,
- un piston de dimension radiale comprise entre celle de la chambre et celle du puits et comportant à mi-hauteur une paroi plane munie d'un téton inférieur dirigé vers le fond et d'un téton supérieur dirigé vers le couvercle, ledit piston étant positionné de manière excentrique dans la chambre, le téton inférieur dirigé vers le fond étant destiné à tourner autour du galet, une première extrémité du téton inférieur étant liée à la paroi, une seconde extrémité du téton inférieur se trouvant dans un espace entre la paroi et le fond
   Le galet et/ou le téton inférieur sont respectivement munis de moyens flexibles permettant à la seconde extrémité du galet et/ou du téton inférieur d'être libre de se mouvoir relativement à la première extrémité du galet et/ou du téton inférieur.
   Avantageusement, les moyens flexibles sont constitués par une tige coiffée par un chapeau dont la forme générale est un T. Selon une première alternative la tige est constituée d'un matériau présentant des propriétés élastiques. Selon une seconde alternative la tige est constituée par un ressort.

Une telle chambre est particulièrement avantageuse, car elle permet au piston lors de son mouvement excentrique dans la chambre de s'éloigner temporairement de la paroi latérale pour permettre le passage de particules solides se trouvant entre la paroi latérale et le piston. Ainsi, les risques de blocage dus aux particules sont réduites de manière importante et la métrologie est maintenue. D'autre part, le mode de réalisation des moyens flexible est particulièrement simple à industrialiser pour un coût comparable aux compteurs volumétriques de l'art antérieur présentant un galet et un téton rigide et fixe.

L'invention concerne également un compteur de liquide volumétrique, en particulier du type à piston oscillant, comportant une chambre de mesure selon l'invention.

D'autres caractéristiques et avantages de l'invention apparaîtront dans la description suivante détaillée, non limitative, de divers modes de réalisation, en référence aux dessins annexés parmi lesquels :
- la figure 1 représente une vue en coupe d'une chambre de mesure selon un premier mode de réalisation de l'invention, le galet étant muni de moyens de flexion selon l'invention,
- la figure 2 représente une vue en coupe d'une chambre de mesure selon un second mode de réalisation de l'invention, le téton inférieur étant muni de moyens de flexion selon l'invention,
- la figure 3 représente une vue en coupe d'une chambre de mesure selon un second mode de réalisation de l'invention, illustrant le fonctionnement de l'invention lorsque des particules solides pénètrent entre la paroi latérale et le piston.

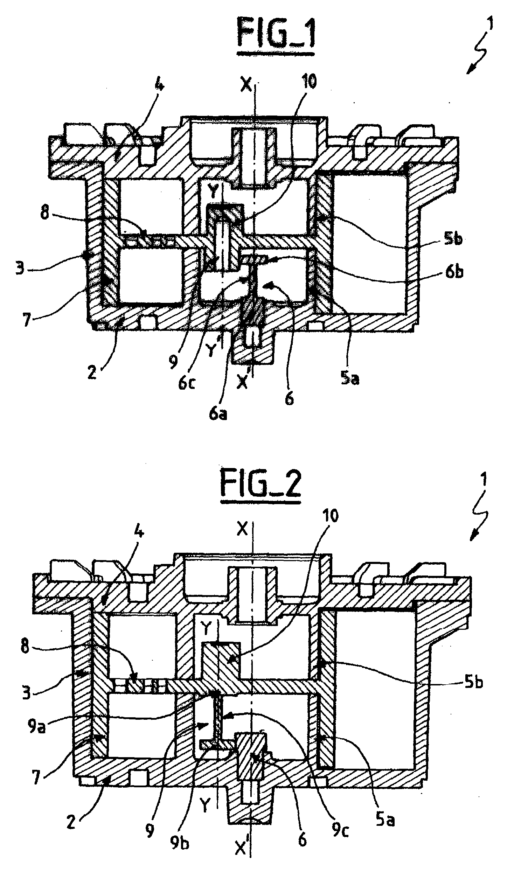

Dans un compteur de liquide à piston oscillant, la chambre de mesure 1 telle que représentée en coupe à la figure 1 est l'élément essentiel dont dépend la précision de mesure du débit. La chambre 1 est de forme cylindrique et comprend un fond 2, une paroi latérale 3 et un couvercle 4. Le fond 2 et le couvercle 4 comportent respectivement un puits, sous la forme d'un cylindre, inférieur 5a et supérieur 5b, de même diamètre, ce diamètre étant inférieur à celui de la chambre. Les deux puits 5a, 5b sont centrés sur l'axe de la chambre. Le puits inférieur 5a comporte en son centre fixé au niveau du fond 2 un galet 6. La diambre de mesure est destinée à venir se positionner dans la bâche d'un compteur de liquide (non représenté) dont la technique est bien connue de l'homme du métier et ne sera par conséquent pas décrit de manière plus détaillée.

Le fond et le couvercle sont munis d'au moins une ouïe d'entrée et une ouïe de sortie (non représentés) pour respectivement l'admission et l'évacuation du fluide dans la chambre de mesure. La chambre de mesure 1 comporte également une cloison fixe (non représentée) de forme rectangulaire, séparant l'ouïe d'entrée et l'ouïe de sortie. La cloison s'étend radialement entre la paroi latérale 3 et les puits inférieur 5a et supérieur 5b et axialement entre le fond 2 et le couvercle 4. Le fond, la paroi latérale, le couvercle et les puits inférieur et supérieur comportent une rainure (non représentée) dans laquelle vient s'encastrer la cloison. Un piston 7 de forme cylindrique de diamètre inférieur à celui de la chambre mais supérieur aux diamètres des puits inférieur et supérieur est positionné de manière excentrique à l'intérieur de la chambre. Le piston 7 comporte à mi-hauteur une paroi plane 8 perforée de trous et supportant en son centre deux tétons 9, 10, l'un dit inférieur 9 dirigé vers le fond, l'autre dit supérieur10 dirigé vers le couvercle. La paroi comporte également une lumière (non représenté) en forme de poire orientée radialement et positionnée de manière excentrique. La lumière en forme de poire débouche sur une fente (non représentée) pratiquée sur toute la hauteur du piston.
Le débitmètre comportant une telle chambre de mesure fonctionne selon le principe de l'admission d'un volume donné de fluide par l'ouïe d'entrée dans le piston 7 qui en communiquant son énergie au piston provoque son déplacement en rotation et son évacuation vers l'ouïe de sortie. Ainsi, chaque révolution du piston 7 correspond au passage d'un volume de fluide donné. Le mouvement général du piston est un mouvement oscillant, l'axe du piston YY' décrivant un cercle autour de l'axe XX' de la chambre 1 et la fente du piston glissant le long de la cloison. Le piston est guidé cinématiquement dans la chambre 1 grâce à l'engagement de la cloison dans la fente verticale et dans la lumière en forme de poire ainsi que par l'engagement du téton inférieur 9 entre le gilet 6 et le puits inférieur 5a. La paroi plane du piston, bien que positionnée entre le puits inférieur 5a et supérieur 5b, reste libre de se mouvoir dans un plan.

Selon un premier mode de réalisation de l'invention, le galet est muni de moyens flexibles permettant à la seconde extrémité du galet d'être libre de se mouvoir relativement à la première extrémité.

Selon un second mode de réalisation de l'invention, le téton inférieur est muni de moyens flexibles permettant à la seconde extrémité du téton inférieur d'être libre de se mouvoir relativement à la première extrémité.

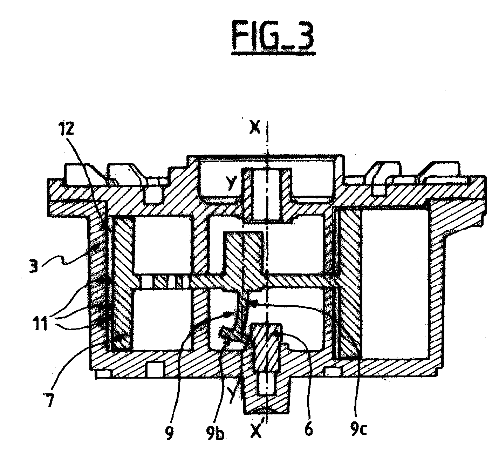

Avec une chambre selon l'invention, le piston 7 lors de son mouvement excentrique dans la chambre peut s'éloigner temporairement de la paroi latérale comme représenté à la figure 3. Par exemple, si des particules solides telles que des grains de sable 11 pénètrent dans la chambre et se trouve entre la paroi latérale et le piston, elles vont être évacuées pendant le mouvement du piston sans bloquer le piston dans la chambre ni même endommager le piston ou la paroi. Dès que les particules solides auront quitté la chambre, le piston reprendra sa position normale dans la chambre de mesure, c'est à dire au contact de la paroi latérale comme représentée aux figures 1 et 2. Le passage des particules n'aura eu aucun effet sur les caractéristiques métrologiques de la chambre, alors que de telles caractéristiques auraient été dégradées partiellement ou totalement sans le dispositif selon l'invention.

Bien entendu, un mode de réalisation particulier non représenté, peut consister à munir à la fois le galet et le téton inférieur de moyens flexibles. Dans ce cas la seconde extrémité du galet, respectivement du téton inférieur est libre de se mouvoir relativement à la première extrémité, de sorte qu'un décollement plus important du piston par rapport à la paroi latérale peut être obtenu.

Les modes de réalisation de l'invention peuvent être mis en oeuvre par différents types de moyens flexibles 6, 9.
De manière avantageuse, les moyens flexibles présentent une forme en T.
Les moyens flexibles 6, 9 en forme de T comportent une tige 6c, 9c présentant un premier diamètre dont une première extrémité 6a, 9a est fixée et la seconde extrémité 6b, 9b est munie d'une pièce présentant un second diamètre supérieur au premier diamètre. Cette pièce peut être un cylindre collé sur la tige. Il peut également s'agir d'un anneau fixé en force sur la tige. La tige et la pièce peuvent également former un ensemble unique par exemple fabriqué en matière plastique par la technique de moulage par injection thermoplastique.

Selon une première alternative, les propriétés de flexibilité des moyens flexibles 6, 9 sont obtenues par la forme spécifique en T, le diamètre de la pièce formant l'extrémité libre étant plus grand que le diamètre de la tige fixé soit dans le fond 2, soit dans la paroi plane.
Il est possible de prévoir que la tige soit formée dans un matériau présentant des propriétés élastiques afin d'améliorer la flexibilité de l'ensemble.

Selon une seconde alternative (non représentée), les propriétés de flexibilité des moyens flexibles 6, 9 sont obtenues par une tige constituée par un ressort.

Le fonctionnement de la chambre de mesure selon l'invention est illustré à la figure 3. Lorsque des particules solides, par exemple des grains de sable 11 pénètrent dans la chambre et se trouve coincés entre la paroi latérale 3 et le piston 7, la flexion du téton inférieur 9 (le même effet serait observé dans le cas du galet 6 muni du dispositif selon l'invention ou si le galet 6 et le téton inférieur 9 étaient munis du dispositif selon l'invention) va permettre de modifier le parcours du piston dans la chambre. L'axe YY' de rotation du piston va se déplacer de manière radiale vers l'axe XX' de la chambre 1 par le fléchissement de la tige 9c alors que la pièce formant l'extrémité libre 9b du téton inférieur 9 reste en contact avec la galet 6. Cette modification du parcours du piston va permettre d'évacuer les grains de sables par l'ouïe de sortie tout en évitant tout blocage du piston 7 ou détérioration de la surface de la paroi latérale 3 ou du piston 7.

Des que les particules solides quittent la chambre, les forces hydraulique agissent sur le piston pour qu'il reprenne sa position normale dans la chambre de mesure, le piston revenant au contact de la paroi latérale. Cet effet est obtenu que le galet 6 ou le téton inférieur 9 soient munis desdits moyens flexibles. Un déplacement radial de l'axe du piston plus important est obtenu lorsque le galet 6 et le téton inférieur 9 sont munis des moyens flexibles.

## Revendications

1. Chambre de mesure (1) pour compteur de liquide volumétrique, en particulier du type à piston oscillant, comportant
- un fond (2),
- une paroi latérale (3),
- un couvercle (4),
- le fond (2) et le couvercle (4) étant munis respectivement d'un puits inférieur (5a) et supérieur (5b) de dimension radiale inférieure à celle de la chambre,
- le puits inférieur (5a) comprenant en son centre un galet (6), une première extrémité (6a) du galet étant liée au fond, une seconde extrémité (6b) du galet se trouvant dans un espace entre le fond et le couvercle,
- un piston (7) de dimension radiale comprise entre celle de la chambre et celle du puits et comportant à mi-hauteur une paroi plane (8) munie d'un téton inférieur (9) dirigé vers le fond et d'un téton supérieur (10) dirigé vers le couvercle (4), ledit piston (7) étant positionné de manière excentrique dans la chambre, le téton inférieur (9) dirigé vers le fond étant destiné à tourner autour du galet (6), ladite chambre de mesure est **caractérisée en ce que** le galet (6) est muni de moyens flexibles permettant à la seconde extrémité (6b) du galet d'être libre de se mouvoir relativement à la première extrémité (6a).

2. Chambre de mesure (1) pour compteur de liquide volumétrique, en particulier du type à piston oscillant, comportant
- un fond (2),
- une paroi latérale (3),
- un couvercle (4),
- le fond (2) et le couvercle (4) étant munis respectivement d'un puits inférieur (5a) et supérieur (5b) de dimension radiale inférieure à celle de la chambre,
- le puits inférieur (5a) comprenant en son centre un galet (6),
- un piston (7) de dimension radiale comprise entre celle de la chambre et celle du puits et comportant à mi-hauteur une paroi plane (8) munie d'un téton inférieur (9) dirigé vers le fond et d'un téton supérieur (10) dirigé vers le couvercle (4), ledit piston (7) étant positionné de manière excentrique dans la chambre, le téton inférieur (9) dirigé vers le fond étant destiné à tourner autour du galet (6), une première extrémité (9a) du téton inférieur étant liée à la paroi plane (8), une seconde extrémité (9b) du téton inférieur se trouvant dans un espace entre la paroi plane (8) et le fond (2), ladite chambre de mesure est **caractérisée en ce que** le téton inférieur (9) est muni de moyens flexibles permettant à la seconde extrémité (9b) du téton inférieur d'être libre de se mouvoir relativement à la première extrémité (9a).

3. Chambre de mesure pour compteur de liquide volumétrique selon la revendication 1 ou 2, dans laquelle les moyens flexibles présentent une forme en T.

4. Chambre de mesure pour compteur de liquide volumétrique selon la revendication 1 ou 2, dans laquelle les moyens flexibles comportent une tige (6c, 9c) présentant un premier diamètre dont une première extrémité (6a, 9a) est fixée et la seconde extrémité (6b, 9b) libre est munie d'une pièce présentant un second diamètre supérieur au premier diamètre.

5. Chambre de mesure pour compteur de liquide volumétrique selon la revendication 4, dans laquelle la pièce est un cylindre collé sur la tige.

6. Chambre de mesure pour compteur de liquide volumétrique selon la revendication 4, dans laquelle la pièce est un anneau fixé en force sur la tige.

7. Chambre de mesure pour compteur de liquide volumétrique selon la revendication 4, dans laquelle la tige et la pièce forme un ensemble unique.

8. Chambre de mesure pour compteur de liquide volumétrique selon l'une des revendications 4 à 7, dans laquelle la tige est formée dans un matériau présentant des propriétés élastiques.

9. Chambre de mesure pour compteur de liquide volumétrique selon l'une des revendications 4 à 7, dans laquelle la tige est constituée par un ressort.

10. Compteur de liquide volumétrique, en particulier du type à piston oscillant, **caractérisé en ce qu'**il comporte une chambre de mesure selon l'une des revendications précédentes.
